(19) Europäisches Patentamt
European Patent Office
Office européen des brevets

(11) Veröffentlichungsnummer: **0 396 020 A2**

(12) # EUROPÄISCHE PATENTANMELDUNG

(21) Anmeldenummer: **90107961.6**

(51) Int. Cl.⁵: **D01F 6/56, D01F 6/90**

(22) Anmeldetag: **26.04.90**

(30) Priorität: **29.04.89 DE 3914226**

(43) Veröffentlichungstag der Anmeldung:
**07.11.90 Patentblatt 90/45**

(84) Benannte Vertragsstaaten:
**AT BE DE ES FR GB IT LU NL**

(71) Anmelder: **HOECHST AKTIENGESELLSCHAFT**
**Postfach 80 03 20**
**D-6230 Frankfurt am Main 80(DE)**

(72) Erfinder: **Miess, Georg-Emerich, Dr.**
**Birkenweg 1**
**D-6240 Königstein/Taunus(DE)**
Erfinder: **Klein, Peter, Dr.**
**Fasanenweg 13**
**D-6200 Wiesbaden(DE)**

(54) **Fasermaterialien aus homogenen Legierungen aus aromatischen Polyamiden und Poly-N-Vinyl-pyrrolidon, Verfahren zu ihrer Herstellung und ihre Verwendung.**

(57) Fasermaterialien aus synthetischen Polymeren, dadurch gekennzeichnet, daß das synthetische Polymer eine homogene Legierung ist, bestehend im wesentlichen aus

α) Poly-N-vinylpyrrolidon (PVP) und

β) mindestens einem Homo- oder Copolyaramid mit mindestens einer wiederkehrenden Struktureinheit der Formel (I)

$$-\!\!\left( \overset{\overset{O}{\|}}{C} - E^1 - \overset{\overset{O}{\|}}{C} - NH - E^2 - NH \right)\!\!- \qquad (I)$$

in der $E^1$ und $E^2$ gleich oder verschieden sind und zweibindige aromatische oder aliphatische Reste bedeuten.

Fig. 3

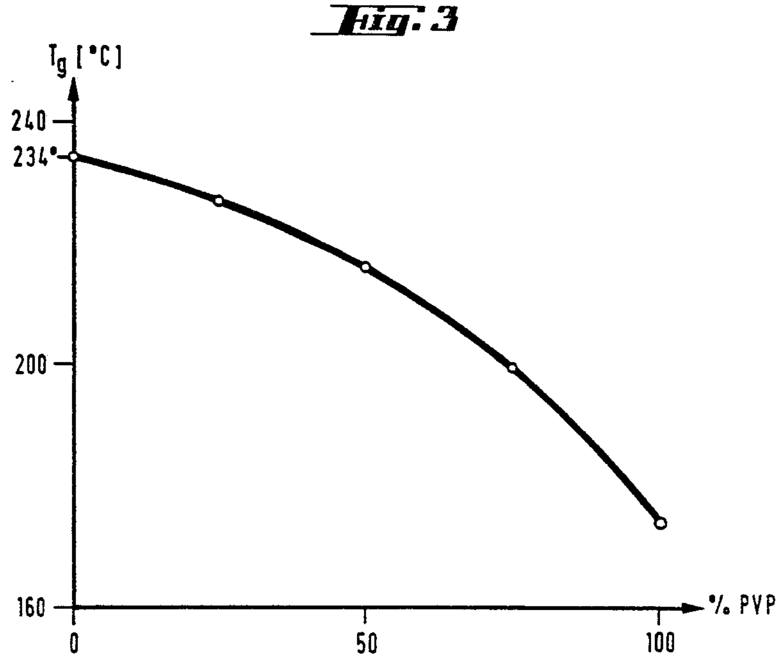


EP 0 396 020 A2

Xerox Copy Centre

# Fasermaterialien aus homogenen Legierungen aus aromatischen Polyamiden und Poly-N-Vinylpyrrolidon, Verfahren zu ihrer Herstellung und ihre Verwendung

Die Erfindung betrifft Fasermaterialien aus homogenen Legierungen von aromatischen Polyamiden mit Poly-N-vinylpyrrolidon, ein Verfahren zu ihrer Herstellung, und ihre Verwendung. Der Begriff homogene Legierungen sagt aus, daß die Komponenten der Legierung eine im wesentlichen einheitliche Phase bilden.

Unter Fasermaterialien sind zu verstehen fadenförmige Gebilde wie Monofilamente, Fäden, z.B. Multifilamentgarn, und Stapelfasergarn, Stapelfasern, Faserpulp, auch in Form von Wirrvliesen, Gelegen, Geweben, Gewirken und derartigen flächenförmigen Textilmaterialien.

Fasermaterialien aus aromatischen Polyamiden (im folgenden als Polyaramide bezeichnet) sind bekannt für ihre ausgezeichneten thermischen, chemischen und mechanischen Eigenschaften. Daher sind sie für technische Einsatzgebiete gut geeignet z.B. zur Verstärkung von Kunststoffen, als Filtermaterialien oder für hochfeste Planen und dergleichen.

Poly-N-vinylpyrrolidon (PVP) ist mit unterschiedlichen Molekulargewichten im Handel. Bis zu Molekulargewichten von ca. einer Million löst sich PVP schon in kaltem Wasser. Die Erweichungstemperatur (Glastemperatur) von PVP beträgt im vollkommen wasserfreien Zustand 175 °C. PVP weist folgende wiederkehrende Struktureinheiten auf:

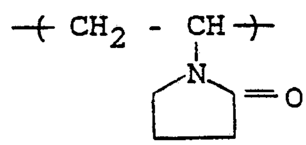

Die Synthese und die Eigenschaften von PVP sind ausführlich beschrieben in Houben-Weyl: Methoden der Organischen Chemie, Band XIV/1, S. 1106 ff. (1961)

Es ist weiterhin bekannt, Polymere zu legieren, um neue Werkstoffe herzustellen, wie sie auf andere Art und Weise, z.B. durch Copolymerisation, nicht oder nur schwierig realisierbar sind. Insbesondere können auf diese Weise technologisch wichtige Eigenschaften verbessert werden, z.B. thermische Stabilität, mechanische Eigenschaften und Lösungsmittelresistenz, und nicht zuletzt die für die Verarbeitung der Polymermaterialien wichtige Glasübergangstemperatur. Zudem wird häufig ihre Wirtschaftlichkeit erhöht.

Man ist jedoch bis heute weit davon entfernt, die Eigenschaften einer Legierung aus den Eigenschaften der Einzelkomponenten vorherzusagen zu können. Daher bleibt das Legieren von Polymeren noch weitgehend empirisch. Insbesondere ist die homogene Mischbarkeit oder Kompatibilität von Legierungen, speziell solchen aus stark wechselwirkenden Polymeren, trotz einer sehr großen Zahl von experimentellen und theoretischen Arbeiten auf diesem Gebiet bisher nicht vorhersagbar. So ist bekannt, daß kompatible Legierungen aus Polymeren selten sind (Journal of Polymer Science, Polymer Physics Edition, Vol. 21, S. 11 (1983)).

Mehrphasige Legierungen können meist von homogen gemischten Legierungen durch transmissionselektronenmikroskopische Untersuchungen an Dünnschnitten unterschieden werden. Auch rasterelektronenmikroskopische Untersuchungen von Bruchflächen oder geätzten Oberflächen von Legierungen erlauben Rückschlüsse auf die Mischbarkeit der enthaltenden Komponenten.

Die Herstellung von mikroporösen, hochfesten Hohlfasern aus einer stabilen Lösung aus aromatischen Polysulfonpolymeren bzw. aromatischen Polyamiden als faserbildenden Polymeren, PVP und geeigneten Lösungsmitteln wie Dimethylacetamid oder Dimethylformamid ist bekannt (US-PS 4,051,300). Diese Veröffentlichung betont, daß das Polyaramid mit PVP nur begrenzt verträglich sein soll und daß beim beschriebenen Koagulationsprozess, der mit der Filamentbildung einhergeht, eine Phasenseparation eintritt.

Es wurde nun gefunden, daß bestimmte Polyaramide mit PVP überraschenderweise homogen gemischte Legierungen bilden, die abhängig von dem Mischungsverhältnis beider Komponenten die gezielte Einstellung der oben genannten physikalischen Eigenschaften erlauben und daß sich diese Legierungen hervorragend zur Herstellung von Fasermaterialien eignen.

Die Erfindung betrifft somit Fasermaterialien aus homogenen Legierungen enthaltend im wesentlichen

α) Poly-N-vinylpyrrolidon (PVP) und

β) mindestens ein Homo- oder Copolyaramid mit mindestens einer wiederkehrenden Struktureinheit der Formel (I)

$$-\!\!\left(\overset{O}{\overset{\|}{C}} - E^1 - \overset{O}{\overset{\|}{C}} - NH - E^2 - NH\right)\!\!- \quad (I)$$

in der $E^1$ und $E^2$ gleich oder verschieden sind und aus den Gruppierungen

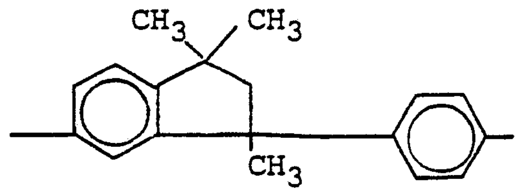

- $Ar^1$-
- $Ar^1$-X-$Ar^2$- ausgewählt sind,

in denen $Ar^1$ und $Ar^2$ gleiche oder verschiedene 1,2-Phenylen-, 1,3-Phenylen- oder 1,4-Phenylenreste, die durch ($C_1$-$C_6$)-Alkyl, ($C_1$-$C_6$)-Alkoxy, vorzugsweise mit jeweils bis zu 4 C-Atomen in der Alkylgruppe, $-CF_3$ oder Halogen, beispielsweise Fluor, Chlor oder Brom, substituiert sein können, und $Ar^1$ zusätzlich Naphthylen-1,2; -1,3; -1,4; -1,5; -1,6; -1,7; -1,8; -2,3; -2,6 und -2,7-Reste bedeuten und der Rest X

a) eine direkte Bindung ist oder einen der folgenden zweiwertigen Reste darstellt -O-, $-SO_2-$, -CO-, -CO-NH-, $-C(R^1)_2-$, in dem $R^1$ Wasserstoff, ($C_1$-$C_6$)-Alkyl oder Fluoralkyl mit 1-4 C-Atomen in der Alkylgruppe ist, wie $-CH_2-$, $-C(CH_3)_2-$oder $-C(CF_3)_2-$ oder

b) -Z-$Ar^1$-Z-, in dem Z der Rest -O- oder $-C(CH_3)_2-$ist, oder

c) -O-$Ar^1$ -Y-$Ar^2$-O-, in der Y die unter a) für X angegebene Bedeutung hat.

Das Homo- oder Copolyaramid wird aus wiederkehrenden Struktureinheiten der Formel (I) gebildet. Die einzelnen Struktureinheiten der Polymeren können verschieden sein, so daß bei den Copolymeren sowohl $E^1$ als auch $E^2$ unterschiedliche Reste darstellen können.

Das Element

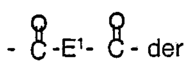 der Struktureinheit der Formel I leitet sich beispielsweise von folgenden Verbindungen ab:

Aromatische Dicarbonsäurederivate der Formel Cl-CO-$Ar^1$-CO-Cl wie 4,4′-Diphenylsulfondicarbonsäuredichlorid,
4,4′-Diphenyletherdicarbonsäuredichlorid,
4,4′-Diphenyldicarbonsäuredichlorid,
2,6-Naphthalindicarbonsäuredichlorid,
Isophthalsäuredichlorid, ganz besonders aber
Terephthalsäuredichlorid und substituiertes
Terephthalsäuredichlorid, z.B.
2-Chlor-Terephthalsäuredichlorid.

Das Element -NH-$E_2$-NH leitet sich ab von aromatischen Diaminen der Struktur $H_2N$-$Ar^1$-$NH_2$ wie m-Phenylendiamine bzw. substituierte Phenylendiamine, z.B. 2-Chlor-, 2,5-Di-Chlor- oder 2-Methoxy-p-Phenylendiamin, insbesondere p-Phenylendiamin,
substituierten Benzidinderivaten der Formel

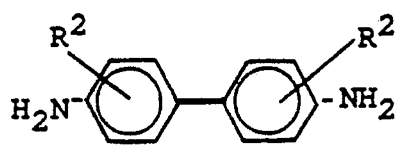

in der $R^2$ einen niederen Alkyl- oder Alkoxyrest mit bis zu je 4 C-Atomen in der Alkylgruppe, vorzugsweise $-CH_3$ oder $-OCH_3$, oder F, Cl oder Br darstellt,
wie 3,3′-Dimethoxy-, 3,3′-Di-Chlor-, 2,2′-Dimethyl- und vorzugsweise 3,3′-Dimethylbenzidin,
Diaminkomponenten der Formel $H_2N$-$Ar^1$-X-$Ar^2$-$NH_2$ wie 4,4′-Diaminobenzophenon, Bis[4-Aminophenyl]-sulfon, Bis [4-(4′-Aminophenoxy)phenyl]-sulfon, 1,2-Bis[4′-Aminophenoxy]-benzol, 4,4′-Diamino-diphenylmethan
1,4-Bis[(4′-Aminophenyl)isopropyl]-benzol, 2,2′-Bis[4-(4′-Aminophenoxy)phenyl]-propan, insbesondere 1,4-Bis-(4′-aminophenoxy)benzol.

Die Elemente -CO-$E^1$-CO- und -NH-$E^2$-NH können sich auch von Gemischen der genannten Dicarbonsäurechloride und/oder der Diamine ableiten.

Vorzugsweise ist $E^1$ ein 1,3- oder 1,4-Phenylenrest, der Rest

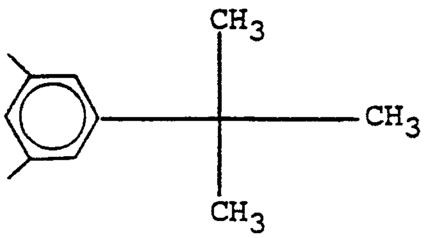

oder

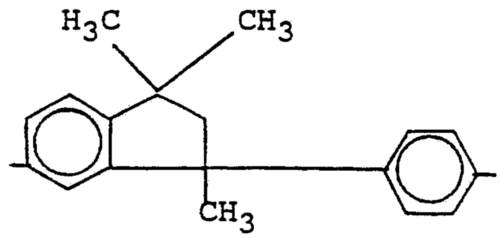

und $E^2$ ein 1,4-Phenylenrest oder der Rest

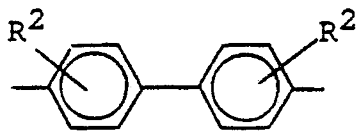

in dem $R^2$ einen niederen Alkyl- oder Alkoxyrest mit bis zu je 4 C-Atomen in der Alkylgruppe oder F, Cl oder Br darstellt, oder der Rest

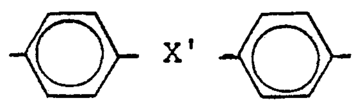

wobei X′ die Gruppe $-C(R^1)_2-$, in der $R^1$ Wasserstoff oder ($C_1$-$C_4$)-Alkyl ist, oder die Gruppierung

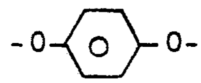

darstellt.

Besonders bevorzugt ist eine Legierung, die neben PVP wenigstens ein Copolyaramid mit mindestens drei statistisch wiederkehrenden Struktureinheiten der Formel (I), in der $E^1$ ein zweiwertiger p-Phenylenrest ist,
$E^2$ in den drei wiederkehrenden Struktureinheiten je einmal ein zweiwertiger p-Phenylenrest, ein Rest der Formel

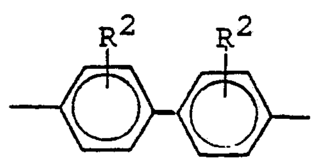

mit $R^2$ gleich $-CH_3$, $-OCH_3$, F, Cl oder Br, und ein Rest der Formel

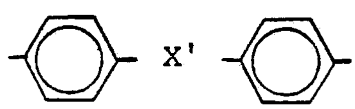

ist, bei dem X′ die oben angeführte Bedeutung hat, enthält, insbesondere wobei das Copolyaramid die wiederkehrenden Struktureinheiten

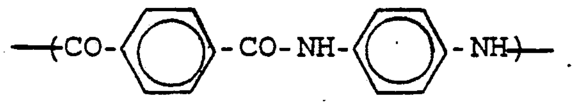

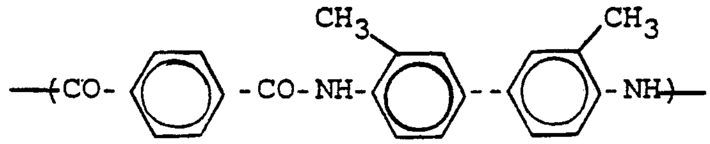

und/oder

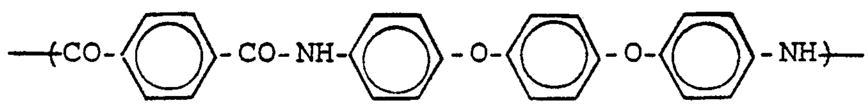

aufweist.

Das Molekulargewicht des in den Legierungen enthaltenen PVP, angegeben als Gewichtsmittel, liegt im allgemeinen bei 1000 - 3 000 000, vorzugsweise bei 40 000 bis 200 000, insbesondere bei 50 000 bis 100 000.

Die Legierungen, aus denen die erfindungsgemäßen Fasermaterialien bestehen, enthalten das PVP in Mengen von 7 bis 70 Gew.-%, bevorzugt von 15 bis 60 Gew.-% und besonders bevorzugt von 45 bis 55 Gew.-%, bezogen auf die Summe der Komponenten ($\alpha$ + $\beta$).

Die Legierungen können Additive in üblichen Mengen enthalten, z.B. thermische Stabilisatoren oder UV-Stabilisatoren. Darüber hinaus können sie weitere Polymere, z.B. Polyimide oder Polyester enthalten, z.B. in Mengen bis zu 10 Gew.-%. Die Mengenverhältnisse beziehen sich in beiden Fällen stets auf die Summe der Komponenten ($\alpha$ + $\beta$).

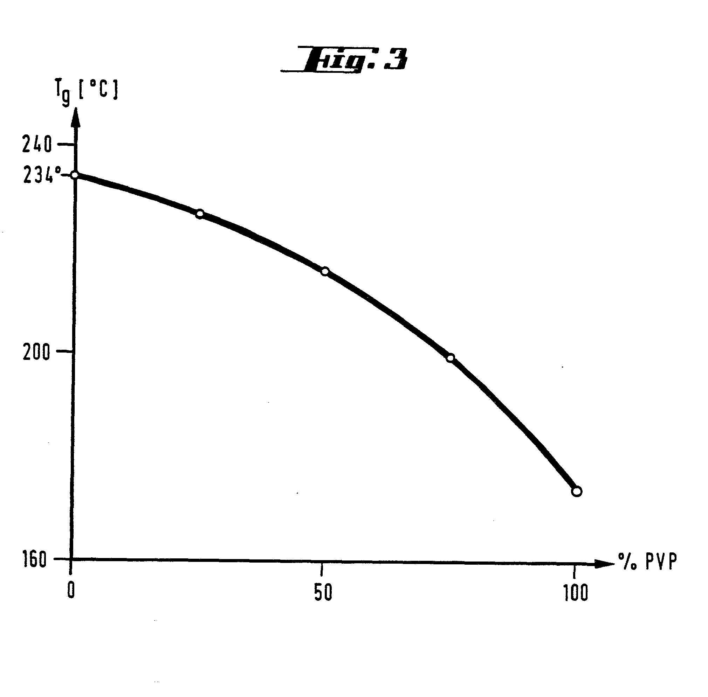

In Abhängigkeit des PVP-Gehaltes läßt sich die Glastemperatur der Legierungen und damit der erfindungsgemäßen Fasermaterialien gezielt variieren. Figur 3 zeigt beispielsweise die Abhängigkeit der Glastemperatur einer Legierung, die ein Aramid mit einer Glastemperatur von ca. 235 °C enthält, von ihrem PVP-Gehalt. Man erkennt den stetigen Übergang von der Glastemperatur der einen zu der der anderen Komponente. In gleicher Weise kann auch ihre Wasseraufnahmefähigkeit beeinflußt werden. Farbige erfindungsgemäße Fasermaterialien können farbige PVP-Copolymeren enthalten. Schließlich ist der Einsatz der erfindungsgemäßen Legierungen wirtschaftlicher im Vergleich zu den Aramiden.

Die homogene Mischbarkeit der Komponenten der Legierungen wurde unter Anwendung mehrerer der vorstehend genannten Methoden nachgewiesen. Beispielsweise zeigen diejenigen homogenen Legierungen, die ein Polyaramid mit einer unterhalb der Zersetzungstemperatur differentialkalorimetrisch nachweisbaren Glastemperatur enthalten, eine einzige, differentialkalorimetrisch nachweisbare Glastemperatur, die zwischen der von PVP (175 °C) und der des eingesetzten Polyaramides liegt. Völlig überraschend ist außerdem, daß das wasserlösliche PVP aus den erfindungsgemäßen Fasermaterialien durch Wasser nicht herausgelöst wird, auch nicht durch mehrstündiges Kochen. Dies ist ein weiteres Indiz dafür, daß die dem erfindungsgemäßen Fasermaterial zugrundeliegenden Legierungen aus homogen gemischten Komponenten bestehen.

Eine bevorzugte Gruppe erfindungsgemäßer Fasermaterialien besteht aus Polymerlegierungen, die neben dem PVP ein Copolyaramid enthalten, das wenigstens die wiederkehrenden Struktureinheiten der Formeln

A) - OC - $Ar^3$ - CO - sowie

B) - NH - $Ar^4$ - NH -

C) 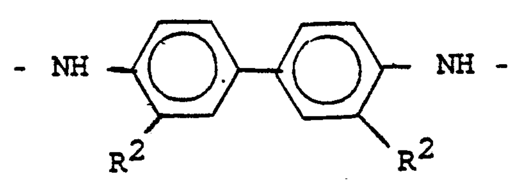

D) 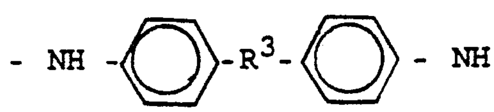

aufweist, wobei

- $Ar^3$ - und - $Ar^4$ - Phenylen oder Naphthylenreste, bei denen die Valenzbindungen in para- oder vergleichbarer koaxialer oder paralleler Stellung stehen, und die wie $Ar^1$ und $Ar^2$ substituiert sein können,
- $R^2$ einen niederen Alkylrest oder einen niederen Alkoxyrest mit jeweils bis zu 4 C-Atomen oder einen Halogenrest und
- $R^3$ - einen Rest der Formel $-C(R^1)_2-$ worin $R^1$ Wasserstoff; $(C_1-C_6)$-Alkyl oder Fluoralkyl mit 1-4 C-Atomen in der Alkylgruppe ist, wie $-CH_2-$, $-C(CH_3)_2-$oder $-C(CF_3)_2-$ oder eine Gruppierung - O - $Ar^4$- O -, wobei - $Ar^4$ - den gleichen Aufbau wie oben angegeben hat,

bedeuten, und die Anteile der Diaminkomponenten B, C und D zur Gesamtmenge an Diaminkomponenten in Mol-% innerhalb eines Bereiches liegen, der durch die folgenden Eckpunkte im Dreieckskoordinatensystem der Figur 1 definiert ist:

Punkt Q entsprechend 5 Mol-% B, 45 Mol-% C, 50 Mol-% D;
Punkt R entsprechend 45 Mol-% B, 5 Mol-% C, 50 Mol-% D;
Punkt S entsprechend 60 Mol-% B, 35 Mol-% C, 5 Mol-% D;
Punkt T entsprechend 20 Mol-% B, 75 Mol-% C, 5 Mol-% D;
Punkt U entsprechend 5 Mol-% B, 80 Mol-% C, 15 Mol-% D.

Bevorzugt gilt ein Bereich mit den Eckpunkten

Punkt Q′ entsprechend 15 Mol-% B, 45 Mol-% C, 40 Mol-% D;
Punkt R′ entsprechend 40 Mol-% B, 20 Mol-% C, 40 Mol-% D;
Punkt S′ entsprechend 50 Mol-% B, 40 Mol-% C, 10 Mol-% D;
Punkt T′ entsprechend 15 Mol-% B, 75 Mol-% C, 10 Mol-% D.

Besonders bevorzugt sind Bereiche mit den nachfolgend definierten Eckpunkten. Sie sind in der Figur 2 graphisch dargestellt.

Punkt W entsprechend 5 Mol-% B, 45 Mol-% C, 50 Mol-% D;
Punkt X entsprechend 45 Mol-% B, 5 Mol-% C, 50 Mol-% D;
Punkt Y entsprechend 45 Mol-% B, 40 Mol-% C, 15 Mol-% D;
Punkt Z entsprechend 5 Mol-% B, 80 Mol-% C, 15 Mol-% D.

Fasermaterialien aus dieser Gruppe von Legierungen werden insbesondere dann mit hervorragenden Eigenschaften erhalten, wenn in den Copolyamid-Anteilen der Legierungen die einzelnen Anteile der Diaminkomponenten zur Gesamtmenge der Diaminkomponenten in Mol-% innerhalb eines engeren Bereiches liegen, der durch die folgenden Eckpunkte definiert ist.

Punkt W′ entsprechend 15 Mol-% B, 50 Mol-% C, 35 Mol-% D;
Punkt X′ entsprechend 45 Mol-% B, 20 Mol-% C, 35 Mol-% D;
Punkt Y′ entsprechend 45 Mol-% B, 40 Mol-% C, 15 Mol-% D;
Punkt Z′ entsprechend 15 Mol-% B, 70 Mol-% C, 15 Mol-% D.

Auch dieser engere Bereich ist in der Figur 2 in Dreieckskoordinaten dargestellt.

In den Copolyaramiden diesere bevorzugten Gruppe erfindungsgemäßer Fasermaterialien bedeutet $Ar^3$ und $Ar^4$ vorzugsweise einen 1,4-Phenylrest und $R^2$ ist vorzugsweise $-CH_3$, $-OCH_3$ oder -Cl.

Die inhärente Viskosität dieser bevorzugten Copolyamide soll zwischen 2,4 und 20 dl/g liegen. Bevorzugte Obergrenze der Viskosität ist 10 dl/g. Sie wurde bestimmt an Lösungen von jeweils 0,5 g Polymer in 100 ml 98 gew-%iger Schwefelsäure bei 25° C.

Unter inhärenter Viskosität wird der Ausdruck

$$\frac{\ln \eta_{rel}}{c} \quad \text{verstanden.}$$

$\eta_{rel}$ bedeutet dabei die relative Viskosität, c die angewandte Konzentration in g/100 ml.

Eine weitere bevorzugte Gruppe erfindungsgemäßer Fasermaterialien besteht aus Polymerverbindungen, die neben dem PVP ein Copolyaramid enthalten, das zu mindestens 95 Mol% die wiederkehrenden Struktureinheiten der Formeln

E) $-OC-Ar^5-CO-$

F) 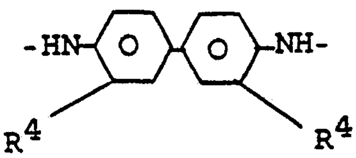

G) 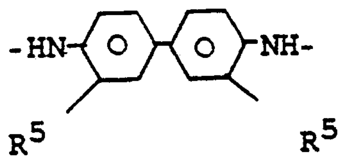

H) 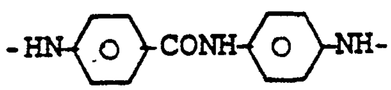

und bis zu 5 Mol% m-Bindungen enthaltende, von aromatischen Dicarbonsäuren ($J'$) und/oder von aromatischen Diaminen ($K'$) abgeleitete Struktureinheiten J und/oder K aufweist, wobei die Summen der Molanteile der Struktureinheiten E + J und der Molanteile der Struktureinheiten F + G + H + K im wesentlichen gleich groß sind,

$-Ar^5-$ einen Phenylen- oder Naphthylenrest bedeutet, dessen Valenzbindungen in para- oder vergleichbarer koaxialer oder paralleler Stellung stehen und der durch einen oder zwei inerte Reste, wie Niederalkyl oder Halogen substituiert sein kann,

$-R^4$ und $-R^5$ voneinander verschiedene niedere Alkylreste oder niedere Alkoxyreste bedeuten,

und die Anteile der Diaminkomponenten F, G, und H im Verhältnis zur Gesamtmenge dieser Diaminkomponenten innerhalb folgender Grenzen liegen:

Struktureinheit F: 30-55 Mol-%, vorzugsweise 33-47 Mol-%

Struktureinheit G: 15-35 Mol-%, vorzugsweise 20-33 Mol-%

Struktureinheit H: 20-40 Mol-%. vorzugsweise 33-40 Mol-%

Die Reste R und $R^5$ sind voneinander verschieden. Dies bedeutet, daß $R^4$ und $R^5$ z.B. zwei unterschiedliche Alkylreste oder zwei unterschiedliche Alkoxyreste sein können. Vorzugsweise jedoch sind die Reste $R^4$ Alkylreste, die Reste $R^5$ Alkoxyreste. Insbesondere steht $R^4$ für Methyl, $R^5$ für Methoxy.

Der Rest $Ar^5$ kann beispielsweise

1,4-Phenylen, 1,4-, 1,5- oder 2,6-Naphthylen oder 4,4'-Diphenylen sein.

Vorzugsweise ist $Ar^5$ ein 1,4-Phenylrest, der unsubstituiert oder durch einen Niederalkylrest oder ein Halogenantom substituiert ist, insbesondere ein 1,4-Phenylrest, der unsubstituiert oder durch eine Methylgruppe oder ein Chloratom substituiert ist.

Besonders bevorzugt ist $Ar^5$ ein unsubstituierter 1,4-Phenylrest.

Eine weitere bevorzugte Gruppe erfindungsgemäßer Fasermaterialien besteht aus Polymerlegierungen, die neben dem PVP ein Copolyaramid enthalten, das zu mindestens 95 Mol% die wiederkehrenden Struktureinheiten der Formeln

L) $-OC-Ar^5-CO-$

M) $-HN-Ar^6-NH-$

N) 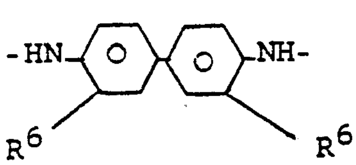

O) 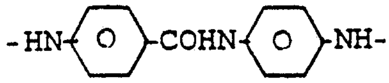

und bis zu 5 Mol% m-Bindungen enthaltende, von aromatischen Dicarbonsäuren (J′) und/oder von aromatischen Diaminen (K′) abgeleitete Struktureinheiten J und/oder K aufweist, wobei die Summen der Molanteile der Struktureinheiten L+J und der Molanteile der Struktureinheiten M+N+O+K im wesentlichen gleichgroß sind,

-$Ar^5$ und -$Ar^6$- Phenylen- oder Naphthylenreste sind, deren Valenzbindungen in para- oder vergleichbarer koaxialer oder paralleler Stellung stehen und die durch einen oder zwei inerte Reste, wie Niederalkyl oder Halogen substituiert sein können,

-$R^6$ niedere Alkylreste sind

und die Anteile der Diaminkomponenten M, N und O im Verhältnis zur Gesamtmenge dieser Diaminkomponenten innerhalb folgender Grenzen liegen:

Struktureinheit M: 15-25 Mol-%, vorzugsweise 15-20 Mol%

Struktureinheit N: 45-65 Mol-%, vorzugsweise 50-55 Mol%

Struktureinheit O: 15-35 Mol-%. vorzugsweise 25-30 Mol%

In den obigen Formeln bedeutet beispielsweise

-$Ar^5$ 1,4-Phenylen, 1,4-, 1,5- oder 2,6-Naphthylen oder 1,4-Diphenylen und

-$Ar^6$- 1,4 Phenylen, 1,4-, 1,5- oder 2,6-Naphthylen ist.

Vorzugsweise sind -$Ar^5$ und -$Ar^6$ 1,4-Phenylenreste, die unsubstituiert oder durch einen Niederalkylrest insbesondere Methyl, oder ein Halogenatom, insbesondere Chlor, substituiert sind.

Besonders bevorzugt sind -$Ar^5$ und -$Ar^6$ unsubstituierte 1,4-Phenylreste.

$R^6$ ist vorzugsweise ein Alkylrest mit 1 bis 2 C-Atomen insbesondere Methyl.

Eine weitere bevorzugte Gruppe erfindungsgemäßer Fasermaterialien besteht aus Polymerlegierungen, die neben dem PVP ein Copolyaramid enthalten, das zu mindestens 95 Mol% die wiederkehrende Struktureinheiten der Formeln

L) -OC-$Ar^5$-CO-

M) -HN-$Ar^6$-NH-

P) 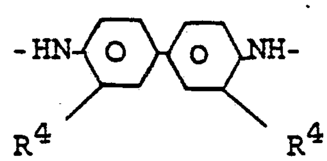

R) 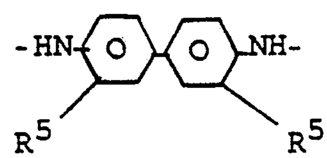

und bis zu 5 Mol% m-Bindungen enthaltende, von aromatischen Dicarbonsäuren (J′) und/oder von aromatischen Diaminen (K′) abgeleitete Struktureinheiten J und/oder K aufweist, wobei die Summen der Molanteile der Struktureinheiten L+J und der Molanteile der Struktureinheiten M+P+R+K im wesentlichen gleich groß sind,

-$Ar^5$ und -$Ar^6$ Phenylen- oder Naphthylenreste sind, deren Valenzbindungen in para- oder vergleichbarer koaxialer oder paralleler Stellung stehen und die durch einen oder zwei inerte Reste, wie Niederalkyl oder Halogen substituiert sein können,

-$R^4$ und -$R^5$ voneinander verschiedene niedere Alkylreste oder niedere Alkoxyreste bedeuten, und die Anteile der Diaminkomponenten M, P und R im Verhältnis zur Gesamtmenge dieser Diaminkomponenten innerhalb folgender Grenzen liegen:

Struktureinheit B: 20-30 Mol-%, vorzugsweise 25-30 Mol%

Struktureinheit C: 35-55 Mol-%, vorzugsweise 40-50 Mol%

Struktureinheit D: 15-40 Mol-%. vorzugsweise 25-30 Mol%

Die Valenzbindungen, die in koaxialer oder paralleler Stellung stehen, sind entgegengesetzt gerichtet. Ein Beispiel für koaxiale, entgegengesetzt gerichtete Bindungen sind die Diphenyl-4-4′-Bindungen. Ein Beispiel für parallele, entgegengesetzt gerichtete Bindungen sind z.B. die Naphthalin-1,5- oder -2,6-Bindungen, während die Naphthalin-1,8-Bindungen parallel gleichgerichtet sind.

Für -$Ar^5$ stehende zweiwertige aromatische Reste, bei denen die Valenzbindungen in para- oder

vergleichbarer koaxialer oder paralleler Stellung stehen, sind ein- oder zweikernige kondensierte aromatische Reste wie z.B. Phenylen-1,4, Naphthylen-1,4, Naphthylen-1,5, Naphthylen-2,6 und 4,4′-Diphenylen.

Bevorzugt für $-Ar^5$ ist Phenylen-1,4.

Der Rest $-Ar^5-$ kann ein- oder zweifach durch Niederalkylreste, das sind geradkettige oder verzweigte Alkylreste mit 1 bis 4 C-Atomen, oder durch Halogen, insbesondere durch F, Cl oder Br substituiert sein. Bevorzugte Alkylsubstituenten sind geradkettig und insbesondere kommen Methyl und Ethyl in Betracht. Bevorzugter Halogensubstituent ist Chlor.

Neben den Struktureinheiten mit paraständigen oder vergleichbaren, koaxial oder parallel entgegengesetzt gerichteten Bindungen können die erfindungsgemäßen Polyamide bis zu 5 Mol-%, bezogen auf alle Struktureinheiten, m-Bindungen enthaltende Struktureinheiten J und K aufweisen. m- Bindungen enthaltende Struktureinheiten J und K im Sinne der vorliegenden Erfindung sind solche, die einen aromatischen Kern enthalten, dessen in der Kette des Polymermoleküls liegende Bindungen zueinander in m-Stellung stehen.

Solche Struktureinheiten sind z.B. die Reste von Isophthalsäure, m-Phenylendiamin, 3,4′-Diaminodiphenyl oder deren Alkyl- und/oder Alkoxysubstitutionsprodukten, oder insbesondere 3,4′- oder 3′,4-Diaminobenzanilid.

Es ist für den Fachmann selbstverständlich, daß die Summe aller von aromatischen Säuren abgeleiteten Struktureinheiten und die Summe aller von aromatischen Aminen abgeleiteten Struktureinheiten der Aramide im wesentlichen gleich sind, das heißt, daß sie sich maximal um ca. 1 %, vorzugsweise maximal um 0,2 %, unterscheiden, insbesondere im Rahmen der praktischen Meß- und Dosierungsmöglichkeiten so weit aneinander angeglichen sind, daß sich die gewünschten hohen Molekulargewichte des Coaramids ergeben.

Zur Herstellung der erfindungsgemäßen Fasermaterialien aus den Polyaramid/PVP-Legierungen werden Lösungen dieser Legierungen in einem geeigneten Aramid-Lösemittel, insbesondere einem aprotischen organischen Lösemittel, z.B. Dimethylformamid, Dimethylacetamid, Dimethylsulfoxid oder N-Methylpyrrolidon filtriert, entgast und in bekannter Weise versponnen. Dies kann beispielsweise durch Einsatz einer Naßspinnanlage erfolgen, wo die Polymerlösung durch geeignete Düsen in ein Fällbad ausgepreßt wird, die erhaltenen Fäden durch Waschbäder gezogen und bei höherer Temperatur verstreckt werden. Als Fällbäder eignen sich wäßrige Lösungen des gleichen Amidlösungsmittels, das auch zur Herstellung der Polymerlösung Verwendung gefunden hat. Es sind aber auch wäßrige Salzlösungen wie z.B. Calciumchloridlösungen verwendbar.

Beim Extrudieren der Polymerlösungen und beim Abzug der Filamente oder Folien aus dem Fällbad tritt nur eine relativ geringe Naßverstreckung ein. Die aus den Fällbädern abgezogenen Filamente müssen daher nach dem üblichen Waschen und Trocknen einer weiteren Verstreckung unterzogen werden, um ihnen die gewünschten mechanischen Eigenschaften, wie hohen Elastizitätsmodul und hohe Reißfestigkeit, zu vermitteln.

Bei der Herstellung der erfindungsgemäßen Fasermaterialien setzt sich demnach die Gesamtverstrekkung zusammen aus einer geringen Naßverstreckung und einer anschließenden höheren Verstreckung. Diese wird der Regel in üblicher Weise bei erhöhter Temperatur auf Streckwerken ausgeführt, in denen zwischen mit unterschiedlicher Umfangsgeschwindigkeit laufenden Galetten eine ein- oder mehrstufige Verstreckung erfolgt.

Um die Filamente auf die erforderliche Verstrecktemperatur zu erwärmen kann eine Kontaktverstrekkung durchgeführt werden, wobei die Filamente über im Streckbereich des Streckwerkes angebrachte heiße Platten ("Bügeleisen") gezogen werden, die Oberflächentemperaturen von 280° C bis 460° C, bevorzugt 340° C bis 450° C aufweisen. Die Filamente werden dabei im Verhältnis 1:4,0 bis ca. 1:15, bevorzugt 1:4 bis 1:12 verstreckt.

Eine ebenfalls geeignete Variante des Spinnverfahrens ist das sog. "Trockendüsen-Naßspinnverfahren", wie es beispielsweise in der US-A-34 14 645 beschrieben ist. Dort wird von oben nach unten gesponnen und die Spinnfäden passieren nach dem Austritt aus der Düse zunächst ein gasförmiges Medium, vorzugsweise Luft, und treten danach in ein wäßriges Koagulationsbad ein. Die weitere Behandlung der so erzeugten Fäden erfolgt wie oben beschrieben. Die aus den Polyaramid/PVP-Legierungen hergestellten Fasern, Filamente oder Faserpulp dienen beispielsweise als Textilfasern, Verstärkungsmaterialien für Kunststoffe bzw. als technische Materialien für Filtration und Isolation. Ein großer Vorteil der erfindungsgemäßen Fasermaterialien ist es, daß sie in ihren Eigenschaften durch Variation der Legierungszusammensetzung bezüglich a) des Aramid/PVP-Verhältnisses, b) des PVP-Types und c) des Aramid-Types optimal an die verschiedenen Verwendungszwecke angepaßt werden können.

Die Legierungen, aus denen die erfindungsgemäßen Fasermaterialien ersponnen werden, können im allgemeinen in üblicher Weise hergestellt werden aus gemeinsamer Lösung von PVP und einem Polyaramid in einem aprotischen organischen Lösungsmittel, z.B. Dimethylformamid, Dimethylsulfoxid, N-Methylpyrrolidon oder N,N-Dimethylacetamid. Dazu stehen beispielsweise folgende Möglichkeiten zur Wahl:

1.

a) Polykondensation eines Polyaramides mittels Lösungs-, Grenzflächen- oder Schmelzekondensation,

b) Lösen des resultierenden Polyaramides,

c) Lösen von PVP und

d) anschließend Mischen der PVP- mit der Polyaramidlösung.

2.

a) Lösungskondensation eines Polyaramides und

b) anschließend direktes Beimengen von trockenem PVP oder einer PVP-Lösung direkt in den Polykondensationsansatz.

3.

a) Lösungskondensation eines Polyaramides in Gegenwart von PVP.

Auch auf diese Weise werden homogene Mischungen der Komponenten erhalten. Dazu werden die Diamine gemeinsam mit PVP gelöst und durch Zugabe von Dicarbonsäuredichloriden zu einer PVP/Polyaramid-Lösung kondensiert.

Die Legierungen können durch Entfernen des Lösungsmittels, vorzugsweise durch Verdampfen, isoliert werden, oder die erhaltenen PVP- Polyaramid- Lösungen werden in bekannter Weise direkt zu den erfindungsgemäßen Fasermaterialien weiterverarbeitet.

Die Herstellung der in den Legierungen enthaltenen Polyaramiden kann im allgemeinen in bekannter Weise durch Lösungs-, Grenzflächen- oder Schmelzekondensation annähernd äquivalenter Mengen von reaktionsfähigen Derivaten, in der Regel Chloriden, von Dicarbonsäuren der Formel $HOOC\text{-}E^1\text{-}COOH$ mit Diaminen der Formel $H_2N\text{-}E^2\text{-}NH_2$ erfolgen. Hierbei bestimmt die Art der Durchführung der Polykondensation, ob statistische Copolymere, Block- oder Pfropfcopolymere entstehen.

Die Lösungskondensation der aromatischen Dicarbonsäurederivate, z.B. der Dicarbonsäuredichloride, mit den aromatischen Diaminen wird in aprotischen, polaren Lösungsmitteln vom Amidtyp wie N,N-Dimethylacetamid oder insbesondere N-Methyl-2-pyrrolidon durchgeführt. Gegebenenfalls können diesen Lösungsmitteln in bekannter Weise zur Erhöhung der Lösefähigkeit bzw. zur Stabilisierung der Polyamidlösungen Halogenidsalze der ersten und/oder zweiten Gruppe des periodischen Systems zugegeben werden. Bevorzugte Zusätze sind Calciumchlorid und/oder Lithiumchlorid. Die genaue Menge an Dicarbonsäurederivat wird so gewählt, daß die gewünschte Lösungsviskosität erreicht wird.

Die Polykondensationstemperaturen liegen üblicherweise zwischen -20 und +120 °C, bevorzugt zwischen +10 und +100 °C. Besonders gute Ergebnisse werden bei Reaktionstemperaturen zwischen +10 und +80 °C erzielt. Die Polykondensationsreaktionen werden im allgemeinen so ausgeführt, daß nach Abschluß der Reaktion 2 bis 30, vorzugsweise 3,5 bis 15 Gew.-% an Polykondensat in der Lösung vorliegen.

Im Verlauf der Polykondensation wächst das Molekulargewicht des Polymers und damit auch die Viskosität des Reaktionsansatzes an.

Die Polykondensation kann in üblicher Weise z.B. durch Zugabe von monofunktionellen Verbindungen wie Benzoylchlorid gestoppt werden.

Eine ausreichende Molekül-Kettenlänge ist in der Regel dann erreicht, wenn die Viskosität der bei der Polykondensation erhaltenen Polymerlösung einer inhärenten Viskosität des Polymers von ca, 4,5 bis 9,0 dl/g entspricht.

Unter inhärenter Viskosität wird wieder der oben bereits angegebene Ausdruck

$$\eta_{inh} = \frac{\ln \eta_{rel}}{c} \quad \text{verstanden.}$$

Nach Beendigung der Polykondensation, d.h. wenn die Polymerlösung die zur Weiterverarbeitung erforderliche Viskosität erreicht hat, wird der entstandene und locker an das Amidlösungsmittel gebundene Chlorwasserstoff durch Zugabe basischer Substanzen neutralisiert. Geeignet sind dafür beispielsweise Lithiumhydroxid, Calciumhydroxid, insbesondere aber Calciumoxid.

In den folgenden Ausführungsbeispielen, die die vorliegende Erfindung veranschaulichen, werden die folgenden Abkürzungen verwendet:

PPD: p-Phenylendiamin

DMB: 3,3-Dimethylbenzidin

BAPOB: 1,4-bis-(Aminophenoxy)benzol
DABA: 4,4′-Diaminobenzanilid
DADPM: 4,4′-Diaminodiphenylmethan
DMOB: 3,3′-Dimethoxybenzidin
DCIB: 3,3′-Dichlorbenzidin
TPC: Terephthaloylchlorid

Beispiel 1

a) 36,8 g (0,1 Mol) BAPOB, 42,4 g (0,2 Mol) DMB, 10,8 g (0,1 Mol) PFD, 5,5 g Calciumchlorid und 5,5 g Lithiumchlorid wurden bei 10 °C unter Inertgas in 2170 g N-Methylpyrrolidon gelöst.
Zwischen 10 °C und 68 °C wurden innerhalb von 90 Minuten 82,2 g (0,45 Mol) TPC zugegeben. Nach erfolgter Polymerisation wurde der Ansatz neutralisiert mit 24,5 g Calciumoxid (96 %ig), filtriert und entgast. Die so hergestellte Polymerisatlösung enthält 6 Gew% Copolyaramid 2,1 Gew% Calciumchlorid und 0,23 Gew% Lithiumchlorid. Das Copolyaramid hat eine inhärente Viskosität von 5,9 dl/g.

b) In die unter a) hergestellte Copolyamidlösung werden 78,7 g Polyvinylpyrrolidon mit einem mittleren Molekulargewicht $M_w$ = 49000 (®Luviskol K30 der Firma BASF) eingemischt und bei 110 °C innerhalb von 2 Stunden eingeknetet. Die so erhaltene Polymerlösung enthält eine Legierung, welche bezogen auf das Polyaramid 50 Gew% PVP enthält.

Diese Lösung wurde filtriert, entgast und naß versponnen. Zu diesem Zweck wurde sie aus einer Düse mit 100 Öffnungen von jeweils 0,1 mm Durchmesser in ein Koagulationsbad, bestehend aus einer 80 °C warmen Lösung von 35 Gew% N-Methylpyrrolidon in Wasser mit einer Spritzgeschwindigkeit von 16,0 Meter/Minute ausgesponnen. Die erhaltenen Filamente wurden durch 2 Wasserbäder und eine Waschmaschine und anschließend über eine Trockengalette und ein Bügeleisen mit einer Temperatur von 400 °C mit einer Geschwindigkeit von 120,5 Meter/Minute abgezogen.

Der erhaltene Multifilamenttiter betrug 196 dtex, die Feinheitsfestigkeit 134 cN/tex und die Reißdehnung 2,7 %. Der Anfangsmodul, der hier wie allen folgenden Beispielen dem Kraft-Dehnungsdiagramm entnommen wurde, betrug, bezogen auf 100 Dehnung, 54 N/tex.

Beispiel 2

a) Eine Copolyaramidlösung wurde hergestellt, wie unter Beispiel 1 a beschrieben. In diese Lösung wurden 157,4 g Polyvinylpyrrolidon vom mittleren Molgewicht $M_w$ = 49000 (®Luviskol K30) innerhalb von 2 Stunden bei 110 °C eingeknetet. Die so erhaltene Polymerisatlösung enthält Copolyaramid und Polyvinylpyrrolidon im Gewichtsverhältnis 1:1.

Die filtrierte und entgaste Lösung wurde durch eine 100 Lochdüse mit einem Lochdurchmesser von je 0,1 mm in ein 80 °C warmes Fällbad bestehend aus 35 % N-Methylpyrrolidon in Wasser ausgesponnen.

Die Filamente wurden analog Beispiel 1 nachgewaschen, getrocknet und auf einem Bügeleisen von 390 °C auf das 6,59-fache verstreckt. Das so erhaltene Multifilamentbündel hat einen Gesamttiter von 199 dtex, eine Feinheitsfestigkeit von 98 cN/tex, eine Reißdehnung von 2,6 % und einen Anfangsmodul von 43 N/tex.

Beispiel 3

8,6 g (0,08 Mol) PPD, 46,64 g (0,22 Mol) DMB, 22,7 g (0,1 Mol) DABA, 5,5 g Calciumchlorid und 5,5 g Lithiumchlorid wurden bei 10 °C unter Inertgas gelöst, in 2170 g N-Methylpyrrolidon.
Zwischen 10 °C und 68 °C wurden innerhalb von 90 Minuten 82,2 g (0,405 Mol) TPC zugegeben, neutralisiert mit 24,5 g Calciumoxid (96 %ig) filtriert und entgast. Die so erhaltene Copolyaramidlösung enthielt 5,5 % des Polymers, 2,1 % Calciumchlorid und 0,23 % Lithiumchlorid. Das Copolymer hatte eine inhärente Viskosität von 12,16 dl/g.

b) In die unter a) hergestellte Copolyaramidlösung werden 65,47 g PVP mit einem mittleren Molekulargewicht $M_w$ von 49000 eingerührt und bei 110 °C innerhalb von 2 Stunden eingeknetet. Die in dieser Weise hergestellte Polymerlösung enthält eine Legierung von 50 Gew% des Copolyaramids und 50 Gew% PVP.

Die Lösung wurde durch eine 100 Lochdüse mit einem Lochdurchmesser von 0,15 mm in ein Koagulationsbad aus 35 %igem wäßrigen N-Methylpyrrolidon von 80 °C ausgesponnen.

Hierbei wurde nach dem Trockendüsennaßspinnverfahren gearbeitet, d.h. die Düse befand sich wenige mm oberhalb der Fällbadoberfläche.
Die erhaltenen Fäden wurden analog Ausführungsbeispiel 1 gewaschen, getrocknet und über ein Bügeleisen von 420° C auf das neunfache verstreckt. Das Multifilamentbündel hatte eine Stärke von 188 dtex und zeigte ein Festigkeit von 137 cN/tex, eine Bruchdehnung von 2,3 % und einen Anfangsmodul von 63 N/tex.

Beispiel 4

a) Eine Polyaramidlösung wurde hergestellt analog Beispiel 3 a.

b) In dieser Polyaramidlösung wurden 196,4 g PVP vom mittleren Molgewicht $M_w$ von 49000 (®Luviskol K30) eingerührt und innerhalb von 2 Stunden bei 110° C eingeknetet.

Diese Spinnlösung enthält eine Legierung aus Polyaramid/PVP im Gewichtsverhältnis 1:3.

Die Spinnlösung wurde durch eine 100 Lochdüse mit einem Lochdurchmesser von 0,15 mm in ein Koagulationsbad bestehend aus einer 38 %igen wäßrigen Methylpyrrolidonlösung von 80° C ausgesponnen. Wie in Beispiel 3 befand sich die Düse dabei wenige mm über der Fällbadoberfläche.
Die erhaltenen Filamente wurden analog Beispiel 1 gewaschen, getrocknet und über ein Bügeleisen von 440° C auf das 5,49-fache verstreckt. Das erhaltene Multifilamentbündel hat einen Titer von 367 dtex, eine Festigkeit von 92 cN/tex, eine Reißdehnung von 2,0 % und einen Anfangsmodul von 48 N/tex.

Beispiel 5

a) 10,7 g (0,1 Mol) PPD, 27,7 g (0,14 Mol) DADPM, 33,9 g (0,16 Mol) DMB, 5,5 g Calciumchlorid und 5,5 g Lithiumchlorid wurden bei 10° C unter Inertgas in 2170 g N-Methylpyrrolidon gelöst. Zwischen 10° C und 68° C wurden innerhalb von 90 Minuten 82,2 g (0,405 Mol) TPC zugegeben, neutralisiert mit 24,5 g Calciumoxid (96 %ig), filtriert und entgast. Die so erhaltene Polymerlösung enthält 5,3 Gew% Polyaramid, 2,1 % Calciumchlorid und 0,23 % Lithiumchlorid. Das Copolyaramid hat eine inhärente Viskosität von 6,01 dl/g.

b) Die unter a) hergestellte Copolyaramidlösung wird mit 62,65 g PVP vom mittleren Molgewicht $M_w$ = 49000 (®Luviskol K30) versetzt, und die Mischung bei 110° C 2 Stunden lang homogengeknetet. Danach wird die Lösung filtriert und entgast.

Die so erhaltene Spinnlösung wurde nach dem in den vorhergehenden Beispielen beschriebenen Trockendüsennaßprozeß versponnen, durch eine 100 Lochdüse mit einem Lochdurchmesser von 0,15 mm. Das Koagulationsbad bestand aus einer 80° C warmen, 35 Gew%igen wäßrigen N-Methylpyrrolidonlösung. Die erhaltenen Filamente wurden analog Beispiel 1 gewaschen, getrocknet und über ein auf 420° C geheiztes Bügeleisen auf das 9,56-fache verstreckt. Das erhaltene Multifilamentbündel hat einen Titer von 91 dtex, eine Festigkeit von 98 cN/tex, eine Bruchdehnung von 2,5 % und einen Anfangsmodul von 42 N/tex.

## Ansprüche

1. Fasermaterialien aus synthetischen Polymeren, dadurch gekennzeichnet, daß das synthetische Polymer eine homogene Legierung ist, bestehend im wesentlichen aus

α) Poly-N-vinylpyrrolidon (PVP) und

β) mindestens einem Homo- oder Copolyaramid mit mindestens einer wiederkehrenden Struktureinheit der Formel (I)

$$-\!\!\left(\overset{O}{\overset{\|}{C}} - E^1 - \overset{O}{\overset{\|}{C}} - NH - E^2 - NH\right)\!\!- \quad (I)$$

in der $E^1$ und $E^2$ gleich oder verschieden sind und aus den Gruppierungen

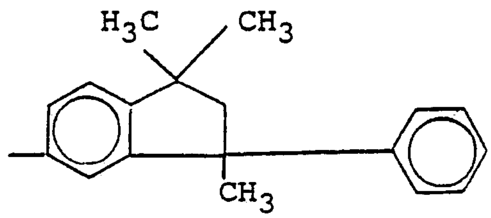

- $Ar^1$- oder
- $Ar^1$-X -$Ar^2$ ausgewählt sind,

in denen $Ar^1$ und $Ar^2$ gleiche oder verschiedene 1,2-Phenylen-, 1,3-Phenylen- oder 1,4-Phenylenreste, die durch ($C_1$-$C_6$)-Alkyl, ($C_1$-$C_6$)-Alkoxy, -$CF_3$ oder Halogen substituiert sein können und $Ar^1$ zusätzlich Naphthylen -1,2; -1,3; -1,4; -1,5; -1,6; -1,7; -1,8; -2,3; -2,6 und -2,7-Reste bedeuten und der Rest X

a) eine direkte Bindung ist oder einen der folgenden zweiwertigen Reste darstellt -O-, -$SO_2$-, -CO-, -CO-NH-, -$C(R^1)_2$-, in dem $R^1$ Wasserstoff, ($C_1$-$C_6$)-Alkyl oder Fluoralkyl mit 1-4 C-Atomen in der Alkylgruppe ist, oder

b) -Z-$Ar^1$-Z-, in dem Z der Rest -O- oder -$C(CH_3)_2$- ist, oder

c) -O-$Ar^1$ -Y-$Ar^2$-O-, in der Y die unter a) für X angegebene Bedeutung hat.

2. Fasermaterial gemäß Anspruch 1 dadurch gekennzeichnet, daß die Legierung 7 bis 78 Gew% Poly-N-Vinylpyrrolidon (PVP) enthält.

3. Fasermaterial gemäß mindestens einem der Ansprüche 1 und 2, dadurch gekennzeichnet, daß das Molekulargewicht des PVP, angegeben als Gewichtsmittel, im Bereich von 1000 bis 3 Millionen, vorzugsweise 40 000 bis 1,5 Millionen liegt.

4. Fasermaterial gemäß mindestens einem der Ansprüche 1 bis 3, dadurch gekennzeichnet, das die Legierung ein Homo- oder Copolyaramid enthält, in dessen Struktureinheiten (I) die Gruppierung $E^1$ gleich oder verschieden ist und einen 1,3-oder 1,4-Phenylrest, den Rest

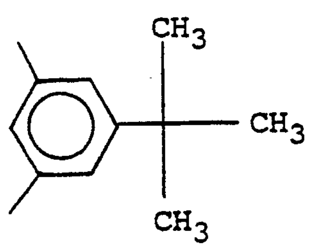

oder

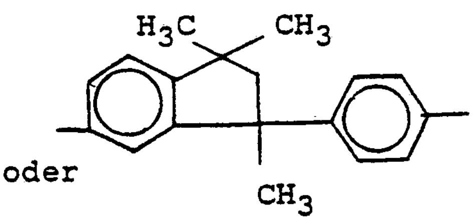

darstellt.

5. Fasermaterial gemäß mindestens einem der Ansprüche 1 bis 4, dadurch gekennzeichnet, daß die Legierung ein Homo-oder Copolyaramid enthält, in dessen Struktureinheiten (I) die Gruppierung $E^2$ gleich oder verschieden ist und den 1,4-Phenylenrest oder den Rest

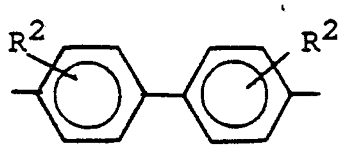

in dem $R^2$ einen niederen Alkyl- oder Alkoxyrest mit bis zu je 4 C-Atomen in der Alkylgruppe oder F, Cl oder Br darstellt, oder den Rest

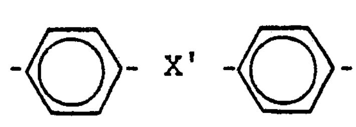 bedeutet oder

dessen Copolyaramid die Struktureinheiten

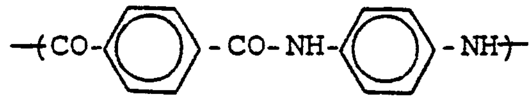

,

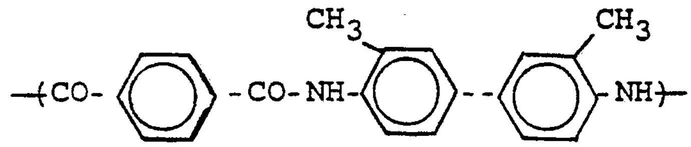

und/oder

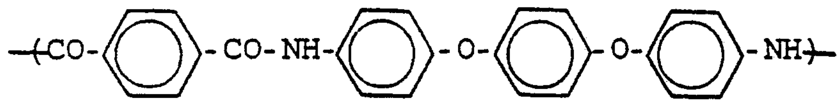

aufweist.

6. Fasermaterial gemäß mindestens einem der Ansprüche 1 bis 3, dadurch gekennzeichnet, daß die Legierung ein Homo- oder Copolyaramid enthält, das wenigstens die wiederkehrenden Struktureinheiten der Formeln

A) - OC - $Ar^3$- CO - sowie

B) - HH - $Ar^4$ - NH -

C) 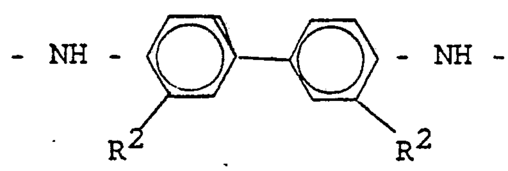

D) 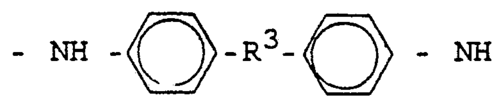

aufweist, wobei

- $Ar^3$- und - $Ar^4$ - Phenylen- oder Naphthylenreste, bei denen die Valenzbindungen in para- oder vergleichbarer koaxialer oder paralleler Stellung stehen, und die wie $Ar^1$ und $Ar^2$ substituiert sein können,

- $R^2$ einen niederen Alkylrest oder einen niederen Alkoxy rest mit jeweils bis zu 4 C-Atomen oder einen Halogenrest und

- $R^3$ einen Rest der Formel $-C(R^1)_2-$ worin $R^1$ Wasserstoff, $(C_1-C_6)$-Alkyl oder Fluoralkyl mit 1-4 C-Atomen in der Alkylgruppe ist, wie $-CH_2-$, $-C(CH_3)_2-$ oder $-C(CF_3)_2-$oder eine Gruppierung -O - $Ar^4$ - O -, worin bei - $Ar^4$ - den gleichen Aufbau wie oben angegeben hat, bedeuten, und die Anteile der Diaminkomponenten B, C und D zur Gesamtmenge an Diaminkomponenten in Mol-% innerhalb eines Bereiches liegen, der durch die folgenden Eckpunkte im Dreieckskoordinatensystem der Figur 1 definiert ist:

Punkt Q entsprechend 5 Mol-% B, 45 Mol-% C, 50 Mol-% D;
Punkt R entsprechend 45 Mol-% B, 5 Mol-% C, 50 Mol-% D;
Punkt S entsprechend 60 Mol-% B, 35 Mol-% C, 5 Mol-% D;
Punkt T entsprechend 20 Mol-% B, 75 Mol-% C, 5 Mol-% D;
Punkt U entsprechend 5 Mol-% B, 80 Mol-% C, 15 Mol-% D;

und das Copolyamid eine inhärente Viskosität von etwa 2,4 bis 20 dl/g (gemessen an Lösungen von 0,5 g Polyamid in 100 ml 98 gew.-%iger $H_2SO_4$ bei 25° C) aufweist.

7. Fasermaterial gemäß mindestens einem der Ansprüche 1 bis 3, dadurch gekennzeichnet, das die Legierung ein Homo-oder Copolyaramid enthält, das zu mindestens 95 Mol% die wiederkehrenden Struktureinheiten der Formeln

L) -OC-$Ar^5$-CO-

M) -HN-$Ar^6$-NH-

N) 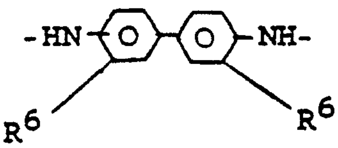

O) 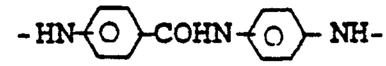

und bis zu 5 Mol% m-Bindungen enthaltende, von aromatischen Dicarbonsäuren (J') und/oder von aromatischen Diaminen (K') abgeleitete Struktureinheiten J und/oder K aufweist, wobei die Summen der Molanteile der Struktureinheiten L + J und der Molanteile der Struktureinheiten M + N + O + K im wesentlichen gleichgroß sind,

-$Ar^5$ und -$Ar^6$ Phenylen- oder Naphthylenreste sind, deren Valenzbindungen in para- oder vergleichbarer koaxialer oder paralleler Stellung stehen und die durch einen oder zwei inerte Reste, wie Niederalkyl oder Halogen substituiert sein können,

-$R^6$ niedere Alkylreste sind

und die Anteile der Diaminkomponenten M, N und O im Verhältnis zur Gesamtmenge dieser Diaminkomponenten innerhalb folgender Grenzen liegen:

Struktureinheit M: 15-25 Mol-%

Struktureinheit N: 45-65 Mol-%,

Struktureinheit O: 15-35 Mol-%.

8. Fasermaterial gemäß mindestens einem der Ansprüche 1 bis 3, dadurch gekennzeichnet, daß die Legierung ein Homo-oder Copolyaramid enthält, das zu mindestens 95 Mol% die wiederkehrenden Struktureinheiten der Formeln

E) -OC-$Ar^5$ CO-

F) 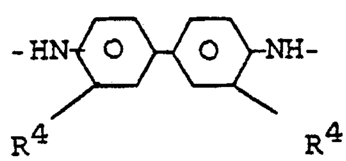

G) 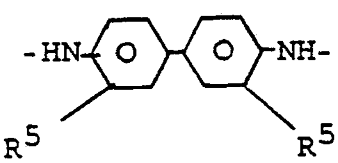

H) 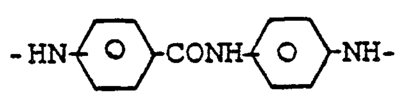

und bis zu 5 Mol% m-Bindungen enthaltende, von aromatischen Dicarbonsäuren (J') und/oder von aromatischen Diaminen (K') abgeleitete Struktureinheiten J und/oder K aufweist, wobei die Summen der Molanteile der Struktureinheiten E + J und der Molanteile der Struktureinheiten F + G + H + K im wesentlichen gleich groß sind,

-$Ar^5$ einen Phenylen- oder Naphthylenrest bedeutet, dessen Valenzbindungen in para- oder vergleichbarer koaxialer oder paralleler Stellung stehen und der durch einen oder zwei inerte Reste, wie Niederalkyl oder Halogen substituiert sein kann,

-$R^4$ und -$R^5$ voneinander verschiedene niedere Alkylreste oder niedere Alkoxyreste bedeuten,

und die Anteile der Diaminkomponenten F, G und H im Verhältnis zur Gesamtmenge dieser Diaminkomponenten innerhalb folgender Grenzen liegen:

Struktureinheit F: 30-55 Mol-%,

Struktureinheit G: 15-35 Mol-%,

Struktureinheit H: 20-40 Mol-%.

9. Fasermaterial gemäß mindestens einem der Ansprüche 1 bis 3, dadurch gekennzeichnet, daß die Legierung ein Homo-oder Copolyaramid enthält, das zu mindestens 95 Mol% die wiederkehrenden Struktureinheiten der Formeln

L) $-OC-Ar^5$ CO-

M) $-HN-Ar^6$ NH-

P) 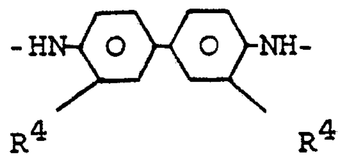

R) 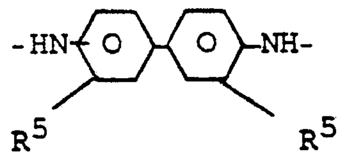

und bis zu 5 Mol% m-Bindungen enthaltende, von aromatischen Dicarbonsäuren (J′) und/oder von aromatischen Diaminen (K′) abgeleitete Struktureinheiten J und/oder K aufweist, wobei die Summen der Molanteile der Struktureinheiten L + J und der Molanteile der Struktureinheiten M + P + R + K im wesentlichen gleich groß sind,

$-Ar^5$ und $-Ar^6$- Phenylen- oder Naphthylenreste sind, deren Valenzbindungen in para- oder vergleichbarer koaxialer oder paralleler Stellung stehen und die durch einen oder zwei inerte Reste, wie Niederalkyl oder Halogen substituiert sein können,

$-R^4$ und $-R^5$ voneinander verschiedene niedere Alkylreste oder niedere Alkoxyreste bedeuten,

und die Anteile der Diaminkomponenten M, P und R im Verhältnis zur Gesamtmenge dieser Diaminkomponenten innerhalb folgender Grenzen liegen:

Struktureinheit M: 20-30 Mol-%,

Struktureinheit P: 35-55 Mol-%,

Struktureinheit R: 15-40 Mol-%.

10. Fasermaterial gemäß Anspruch 6, dadurch gekennzeichnet, daß die Legierung ein Homo- oder Copolyaramid enthält, worin

$Ar^3$ - und $Ar^4$ - jeweils den 1,4-Phenylrest,

$R^2$ $-CH_3$, -OCH3 oder -Cl und

$R^3$ 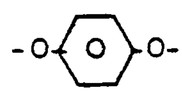 oder 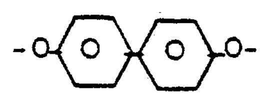 bedeutet.

11. Fasermaterial gemäß mindestens einem der Ansprüche 7 bis 9, dadurch gekennzeichnet, daß die Legierung ein Homo- oder Copolyaramid enthält worin

$-Ar^5$- 1,4-Phenylen, 1,4-, 1,5- oder 2,6-Naphthylen oder 1,4-Diphenylen und

$-Ar^6$- 1,4 Phenylen, 1,4-, 1,5- oder 2,6-Naphthylen ist.

12. Fasermaterial gemäß mindestens einem der Ansprüche 7 bis 9, dadurch gekennzeichnet, daß die Legierung ein Homo- oder Copolyaramid enthält worin

$-Ar^5$ und $-Ar^6$- 1,4-Phenylreste sind, die unsubstituiert oder durch einen Niederalkylrest oder ein Halogenatom substituiert sind.

13. Fasermaterial gemäß mindestens einem der Ansprüche 8 und 9, dadurch gekennzeichnet, daß die Legierung ein Homo- oder Copolyaramid enthält worin

$-R^4$ ein Niederalkylrest und

$-R^5$ ein Niederalkoxyrest ist.

14. Fasermaterial gemäß mindestens einem der Ansprüche 8 und 9, dadurch gekennzeichnet, daß die Legierung ein Homo- oder Copolyaramid enthält worin

$-R^4$ Methyl und $R^5$ Methoxy sind.

15. Fasermaterial gemäß Anspruch 7, dadurch gekennzeichnet, daß die Legierung ein Homo- oder Copolyaramid enthält worin

-$R^6$ ein Alkylrest mit 1 bis 2 C-Atomen, vorzugsweise Methyl, ist.

16. Fasermaterial gemäß mindestens einem der Ansprüche 7 bis 9, dadurch gekennzeichnet, daß die Legierung ein Homo- oder Copolyaramid enthält worin die m-Bindungen enthaltende Struktureinheit der zweiwertige Rest des 3,4'- oder 3',4-Diaminobenzanilids ist.

17. Verfahren zur Herstellung von Fasermaterial aus synthetischen Polymeren durch Verspinnen einer Lösung des Polymeren in einem polaren organischen Lösungsmittel in ein Fällbad, waschen der Filamente, ggf. zwischentrocknen, verstrecken bei erhöhter Temperatur und ggf. anschließende Weiterverarbeitung zu den gewünschten Fasermaterialien, dadurch gekennzeichnet, daß das synthetische Polymer eine der in den Ansprüche 1 bis 16 definierten homogenen Legierungen ist.

18. Verfahren nach Anspruch 17, dadurch gekennzeichnet, daß das synthetische Polymer eine der in den Ansprüchen 6 bis 9 definierten homogenen Legierungen ist.

19. Verwendung der Fasermaterialien der Ansprüche 1 bis 16 zur Herstellung von Textilmaterialien, von technischen Textilerzeugnissen und als Verstärkungsfasern.

Patentansprüche für folgenden Vertragsstaaten: ES

1. Fasermaterialien aus synthetischen Polymeren, dadurch gekennzeichnet, daß das synthetische Polymer eine homogene Legierung ist, bestehend im wesentlichen aus

α) Poly-N-vinylpyrrolidon (PVP) und

β) mindestens einem Homo- oder Copolyaramid mit mindestens einer wiederkehrenden Struktureinheit der Formel (I)

$$-\!\!\left(\overset{O}{\overset{\|}{C}} - E^1 - \overset{O}{\overset{\|}{C}} - NH - E^2 - NH\right)\!\!- \quad (I)$$

in der $E^1$ und $E^2$ gleich oder verschieden sind und aus den Gruppierungen

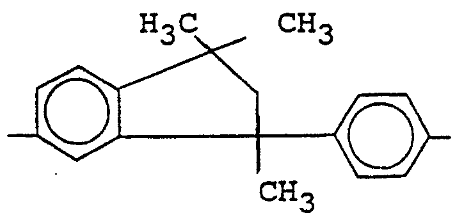

- $Ar^1$- oder

- $Ar^1$ -X-$Ar^2$- ausgewählt sind,

in denen $Ar^1$ und $Ar^2$ gleiche oder verschiedene 1,2-Phenylen-, 1,3-Phenylen- oder 1,4-Phenylenreste, die durch ($C_1$-$C_6$)-Alkyl, ($C_1$-$C_6$)-Alkoxy, -$CF_3$ oder Halogen substituiert sein können und $Ar^1$ zusätzlich Naphthylen -1,2; -1,3; -1,4; -1,5; -1,6; -1,7; -1,8; -2,3 und -2,7-Reste bedeuten und der Rest X

a) eine direkte Bindung ist oder einen der folgenden zweiwertigen Reste darstellt -O-, -$SO_2$-, -CO-, -CO-HH-, -$C(R^1)_2$-, in dem $R^1$ Wasserstoff, ($C_1$-$C_6$)-Alkyl oder Fluoralkyl mit 1-4 C-Atomen in der Alkylgruppe ist, oder

b) -Z-$Ar^1$-Z-, in dem Z der Rest -O- oder -$C(CH_3)_2$- ist, oder

c) -O-$Ar^1$-Y-$Ar^2$-O-, in der Y die unter a) für X angegebene Bedeutung hat.

2. Fasermaterial gemäß Anspruch 1 dadurch gekennzeichnet, daß die Legierung 7 bis 78 Gew% Poly-N-Vinylpyrrolidon (PVP) enthält.

3. Fasermaterial gemäß mindestens einem der Ansprüche 1 und 2, dadurch gekennzeichnet, daß das Molekulargewicht des PVP, angegeben als Gewichtsmittel, im Bereich von 1000 bis 3 Millionen, vorzugsweise 40 000 bis 1,5 Millionen liegt.

4. Fasermaterial gemäß mindestens einem der Ansprüche 1 bis 3, dadurch gekennzeichnet, das die Legierung ein Homo- oder Copolyaramid enthält, in dessen Struktureinheiten (I) die Gruppierung $E^1$ gleich oder verschieden ist und einen 1,3-oder 1,4-Phenylrest, den Rest

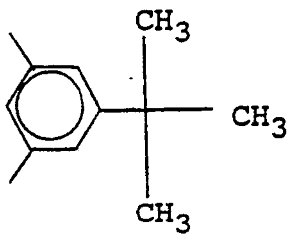

oder

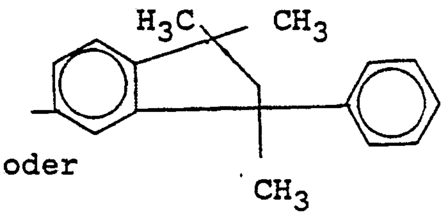

darstellt.

5. Fasermaterial gemäß mindestens einem der Ansprüche 1 bis 4, dadurch gekennzeichnet, daß die Legierung ein Homo-oder Copolyaramid enthält, in dessen Struktureinheiten (I) die Gruppierung $E^2$ gleich oder verschieden ist und den 1,4-Phenylenrest oder den Rest

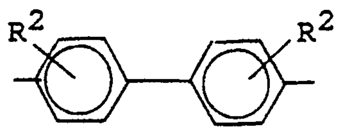

in dem $R^2$ einen niederen Alkyl- oder Alkoxyrest mit bis zu je 4 C-Atomen in der Alkylgruppe oder F, Cl oder Br darstellt, oder den Rest

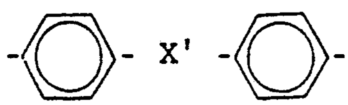 bedeutet oder

dessen Copolyaramid die Struktureinheiten

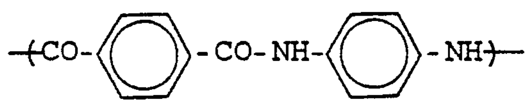 ,

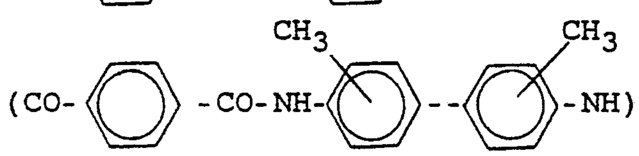 und/oder

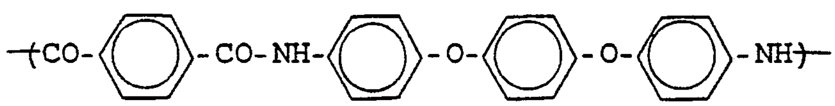

aufweist.

6. Fasermaterial gemäß mindestens einem der Ansprüche 1 bis 3, dadurch gekennzeichnet, daß die Legierung ein Homo- oder Copolyaramid enthält, das wenigstens die wiederkehrenden Struktureinheiten der Formeln

A) - OC - $Ar^3$- CO - sowie

B) - NH - $Ar^4$ - NH -

C) 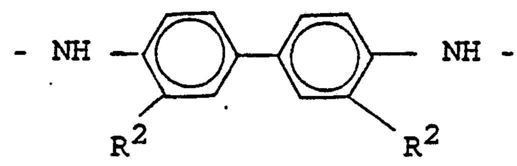

D) 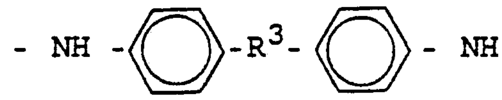

aufweist, wobei

- $Ar^3$- und - $Ar^4$ - Phenylen- oder Naphthylenreste, bei denen die Valenzbindungen in para- oder vergleichbarer koaxialer oder paralleler Stellung stehen, und die wie $Ar^1$ und $Ar^2$ substituiert sein können,
- $R^2$ einen niederen Alkylrest oder einen niederen Alkoxy rest mit jeweils bis zu 4 C-Atomen oder einen Halogenrest und
- $R^3$ einen Rest der Formel $-C(R^1)_2-$ worin $R^1$ Wasserstoff, $(C_1-C_6)$-Alkyl oder Fluoralkyl mit 1-4 C-Atomen in der Alkylgruppe ist, wie $-CH_2-$, $-C(CH_3)_2-$ oder $-C(CF_3)_2-$oder eine Gruppierung -O - Ar - O -, worin bei - Ar - den gleichen Aufbau wie oben angegeben hat, bedeuten, und die Anteile der Diaminkomponenten B, C und D zur Gesamtmenge an Diaminkomponenten in Mol-% innerhalb eines Bereiches liegen, der durch die folgenden Eckpunkte im Dreieckskoordinatensystem der Figur 1 definiert ist:

Punkt Q entsprechend 5 Mol-% B, 45 Mol-% C, 50 Mol-% D;
Punkt R entsprechend 45 Mol-% B, 5 Mol-% C, 50 Mol-% D;
Punkt S entsprechend 60 Mol-% B, 35 Mol-% C, 5 Mol-% D;
Punkt T entsprechend 20 Mol-% B; 75 Mol-% C, 5 Mol-% D;
Punkt U entsprechend 5 Mol-% B, 80 Mol-% C, 15 Mol-% D;
und das Copolyamid eine inhärente Viskosität von etwa 2,4 bis 20 dl/g (gemessen an Lösungen von 0,5 g Polyamid in 100 ml 98 gew.-%iger $H_2SO_4$ bei 25 °C) aufweist.

7. Fasermaterial gemäß mindestens einem der Ansprüche 1 bis 3, dadurch gekennzeichnet, das die Legierung ein Homo-oder Copolyaramid enthält, das zu mindestens 95 Mol% die wiederkehrenden Struktureinheiten der Formeln

L) $-OC-Ar^5-CO-$
M) $-HN-Ar^6-NH-$

N) 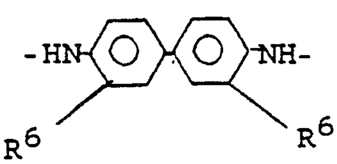

O) 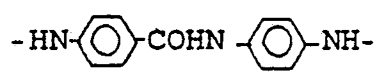

und bis zu 5 Mol% m-Bindungen enthaltende, von aromatischen Dicarbonsäuren (J′) und/oder von aromatischen Diaminen (K′) abgeleitete Struktureinheiten J und/oder K aufweist, wobei die Summen der Molanteile der Struktureinheiten L+J und der Molanteile der Struktureinheiten M+H+O+K im wesentlichen gleichgroß sind,

$-Ar^5$ und $-Ar^6$ Phenylen- oder Naphthylenreste sind, deren Valenzbindungen in para- oder vergleichbarer koaxialer oder paralleler Stellung stehen und die durch einen oder zwei inerte Reste, wie Niederalkyl oder Halogen substituiert sein können,

$-R^6$ niedere Alkylreste sind

und die Anteile der Diaminkomponenten M, N und O im Verhältnis zur Gesamtmenge dieser Diaminkomponenten innerhalb folgender Grenzen liegen:

Struktureinheit M: 15-25 Mol-%,
Struktureinheit N: 45-65 Mol-%,
Struktureinheit O: 15-35 Mol-%.

8. Fasermaterial gemäß mindestens einem der Ansprüche 1 bis 3, dadurch gekennzeichnet, daß die

Legierung ein Homo-oder Copolyaramid enthält, das zu mindestens 95 Mol% die wiederkehrenden Struktureinheiten der Formeln
E) -OC-$Ar^5$ CO-

F) 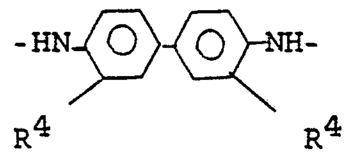

G) 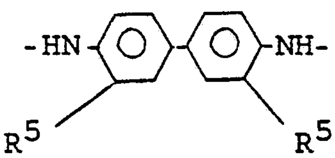

H) 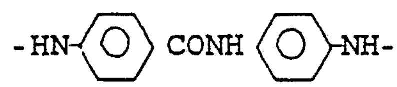

und bis zu 5 Mol% m-Bindungen enthaltende, von aromatischen Dicarbonsäuren ($J'$) und/oder von aromatischen Diaminen ($K'$) abgeleitete Struktureinheiten J und/oder K aufweist, wobei die Summen der Molanteile der Struktureinheiten E + J und der Molanteile der Struktureinheiten F + G + H + K im wesentlichen gleich groß sind,
-$Ar^5$ einen Phenylen- oder Naphthylenrest bedeutet, dessen Valenzbindungen in para- oder vergleichbarer koaxialer oder paralleler Stellung stehen und der durch einen oder zwei inerte Reste, wie Niederalkyl oder Halogen substituiert sein kann,
-$R^4$ und -$R^5$ voneinander verschiedene niedere Alkylreste oder niedere Alkoxyreste bedeuten,
und die Anteile der Diaminkomponenten F, G und H im Verhältnis zur Gesamtmenge dieser Diaminkomponenten innerhalb folgender Grenzen liegen:

Struktureinheit F: 30-55 Mol-%,
Struktureinheit G: 15-35 Mol-%,
Struktureinheit H: 20-40 Mol-%.

9. Fasermaterial gemäß mindestens einem der Ansprüche 1 bis 3, dadurch gekennzeichnet, daß die Legierung ein Homo-oder Copolyaramid enthält, das zu mindestens 95 Mol% die wiederkehrenden Struktureinheiten der Formeln
L) -OC-$Ar^5$ CO-
M) -HN-$Ar^6$ NH-

P) 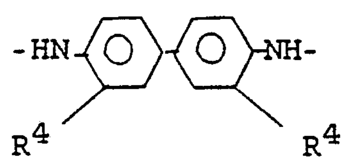

R) 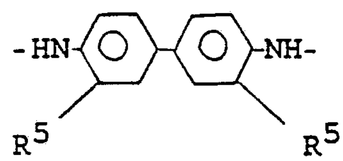

und bis zu 5 Mol% m-Bindungen enthaltende, von aromatischen Dicarbonsäuren ($J'$) und/oder von aromatischen Diaminen ($K'$) abgeleitete Struktureinheiten und/oder K aufweist, wobei die Summen der Molanteile der Struktureinheiten L + J und der Molanteile der Struktureinheiten M + P + R + K im wesentlichen gleich groß sind,
-$Ar^5$ und -$Ar^6$- Phenylen- oder Naphthylenreste sind, deren Valenzbindungen in para- oder vergleichbarer

koaxialer oder paralleler Stellung stehen und die durch einen oder zwei inerte Reste, wie Niederalkyl oder Halogen substituiert sein können,
$-R^4$ und $-R^5$ voneinander verschiedene niedere Alkylreste oder niedere Alkoxyreste bedeuten,
und die Anteile der Diaminkomponenten M, P und R im Verhältnis zur Gesamtmenge dieser Diaminkomponenten innerhalb folgender Grenzen liegen:

Struktureinheit M: 20-30 Mol-%,
Struktureinheit P: 35-55 Mol-%,
Struktureinheit R: 15-40 Mol-%.

10. Fasermaterial gemäß Anspruch 6, dadurch gekennzeichnet, daß die Legierung ein Homo- oder Copolyaramid enthält, worin
$Ar^3$ - und $Ar^4$ - jeweils den 1,4-Phenylrest,
$R^2$ $-CH_3$, $-OCH_3$ oder -Cl und

$R^3$ 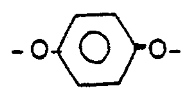 oder 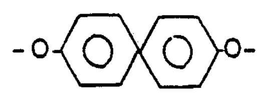 bedeutet.

11. Fasermaterial gemäß mindestens einem der Ansprüche 7 bis 9, dadurch gekennzeichnet, daß die Legierung ein Homo- oder Copolyaramid enthält worin
$-Ar^5-$ 1,4-Phenylen, 1,4-, 1,5- oder 2,6-Naphthylen oder 1,4-Diphenylen und
$-Ar^6-$ 1,4 Phenylen, 1,4-, 1,5- oder 2,6-Naphthylen ist.

12. Fasermaterial gemäß mindestens einem der Ansprüche 7 bis 9, dadurch gekennzeichnet, daß die Legierung ein Homo- oder Copolyaramid enthält worin
$-Ar^5$ und $-Ar^6-$ 1,4-Phenylreste sind, die unsubstituiert oder durch einen Niederalkylrest oder ein Halogenatom substituiert sind.

13. Fasermaterial gemäß mindestens einem der Ansprüche 8 und 9, dadurch gekennzeichnet, daß die Legierung ein Homo- oder Copolyaramid enthält worin
$-R^4$ ein Niederalkylrest und
$-R^5$ ein Niederalkoxyrest ist.

14. Fasermaterial gemäß mindestens einem der Ansprüche 8 und 9, dadurch gekennzeichnet, daß die Legierung ein Homo- oder Copolyaramid enthält worin
$-R^4$ Methyl und $R^5$ Methoxy sind.

15. Fasermaterial gemäß Anspruch 7, dadurch gekennzeichnet, daß die Legierung ein Homo- oder Copolyaramid enthält worin
$-R^6$ ein Alkylrest mit 1 bis 2 C-Atomen, vorzugsweise Methyl, ist.

16. Fasermaterial gemäß mindestens einem der Ansprüche 7 bis 9, dadurch gekennzeichnet, daß die Legierung ein Homo- oder Copolyaramid enthält worin die m-Bindungen enthaltende Struktureinheit der zweiwertige Rest des 3,4′- oder 3′,4-Diaminobenzanilids ist.

17. Verfahren zur Herstellung von Fasermaterial aus synthetischen Polymeren der Ansprüche 1 bis 16 durch Verspinnen einer Lösung des Polymeren in einem polaren organischen Lösungsmittel in ein Fällbad, waschen der Filamente, ggf. zwischentrocknen, verstrecken bei erhöhter Temperatur und ggf. anschließende Weiterverarbeitung zu den gewünschten Fasermaterialien, dadurch gekennzeichnet, daß das synthetische Polymer eine homogene Legierung ist, bestehend im wesentlichen aus

α) Poly-N-vinylpyrrolidon (PVP) und
β) mindestens einem Homo- oder Copolyaramid mit mindestens einer wiederkehrenden Struktureinheit der Formel (I)

$$-\left( \overset{O}{\overset{\|}{C}} - E^1 - \overset{O}{\overset{\|}{C}} - NH - E^2 - NH \right)- \quad (I)$$

in der $E^1$ und $E^2$ gleich oder verschieden sind und aus den Gruppierungen

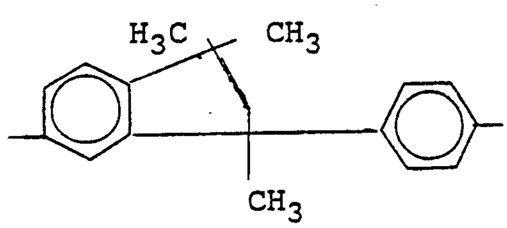

- $Ar^1$- oder
- $Ar^1$ -X-$Ar^2$- ausgewählt sind,

in denen $Ar^1$ und $Ar^2$ gleiche oder verschiedene 1,2-Phenylen-, 1,3-Phenylen- oder 1,4-Phenylenreste, die durch ($C_1$-$C_6$)-Alkyl, ($C_1$-$C_6$)-Alkoxy, -$CF_3$ oder Halogen substituiert sein können und $Ar^1$ zusätzlich Naphthylen -1,2; -1,3; -1,4; -1,5; -1,6; -1,7; -1,8; -2,3 und -2,7-Reste bedeuten und der Rest X

a) eine direkte Bindung ist oder einen der folgenden zweiwertigen Reste darstellt

-O-, -$SO_2$-, -CO-, -CO-NH-, -C($R^1$)$_2$-, in dem $R^1$ Wasserstoff, ($C_1$-$C_6$)-Alkyl oder Fluoralkyl mit 1-4 C-Atomen in der Alkylgruppe ist, oder

b) -Z-$Ar^1$-Z-, in dem Z der Rest -O- oder -C($CH_3$)$_2$- ist, oder

c) -O-$Ar^1$ -Y-$Ar^2$-O-, in der Y die unter a) für X angegebene Bedeutung hat.

18. Verwendung der Fasermaterialien der Ansprüche 1 bis 16 zur Herstellung von Textilmaterialien, von technischen Textilerzeugnissen und als Verstärkungsfasern.

Fig. 1

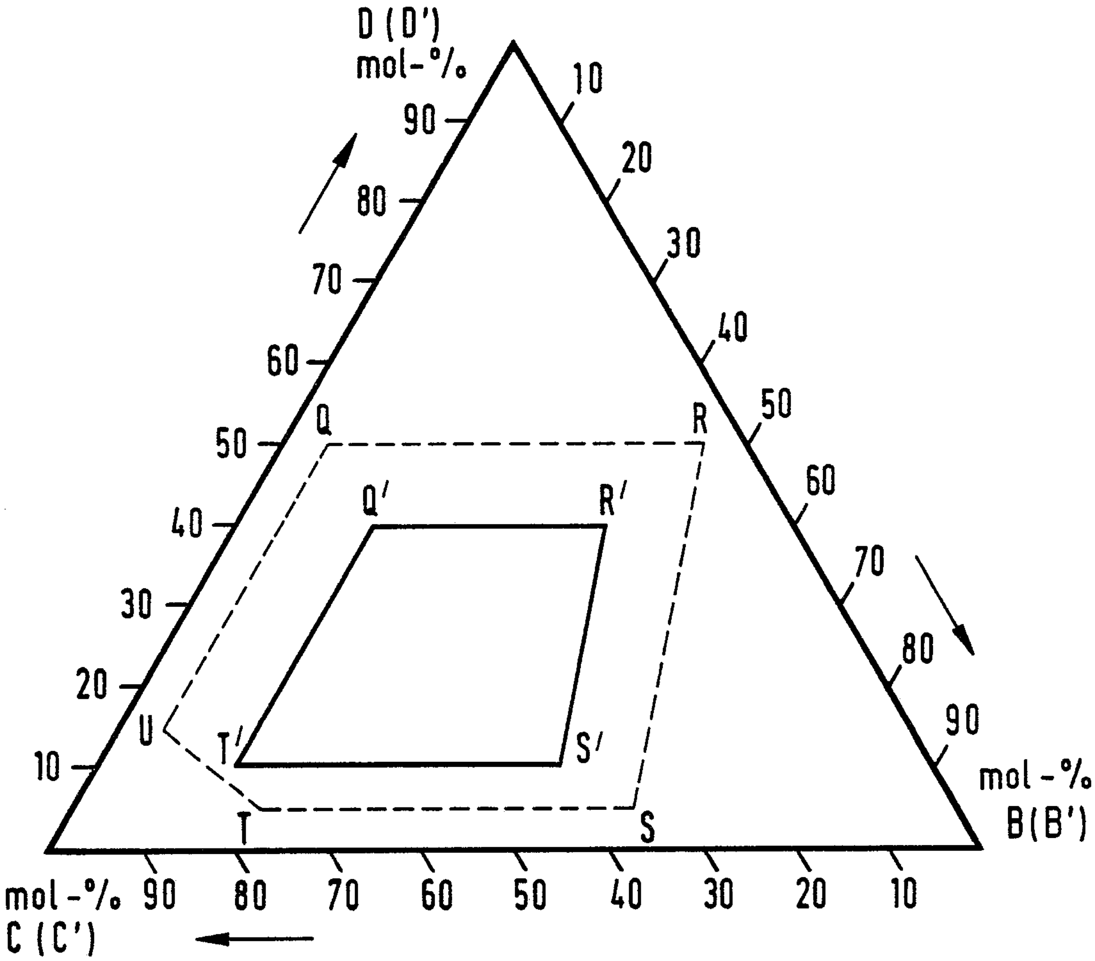
D (D')
mol-%
90
80
70
60
50
40
30
20
10
10
20
30
40
50
60
70
80
90
mol-%
B(B')
Q
R
Q'
R'
U
T'
S'
T
S
mol-%
C (C')
90
80
70
60
50
40
30
20
10

Fig. 2

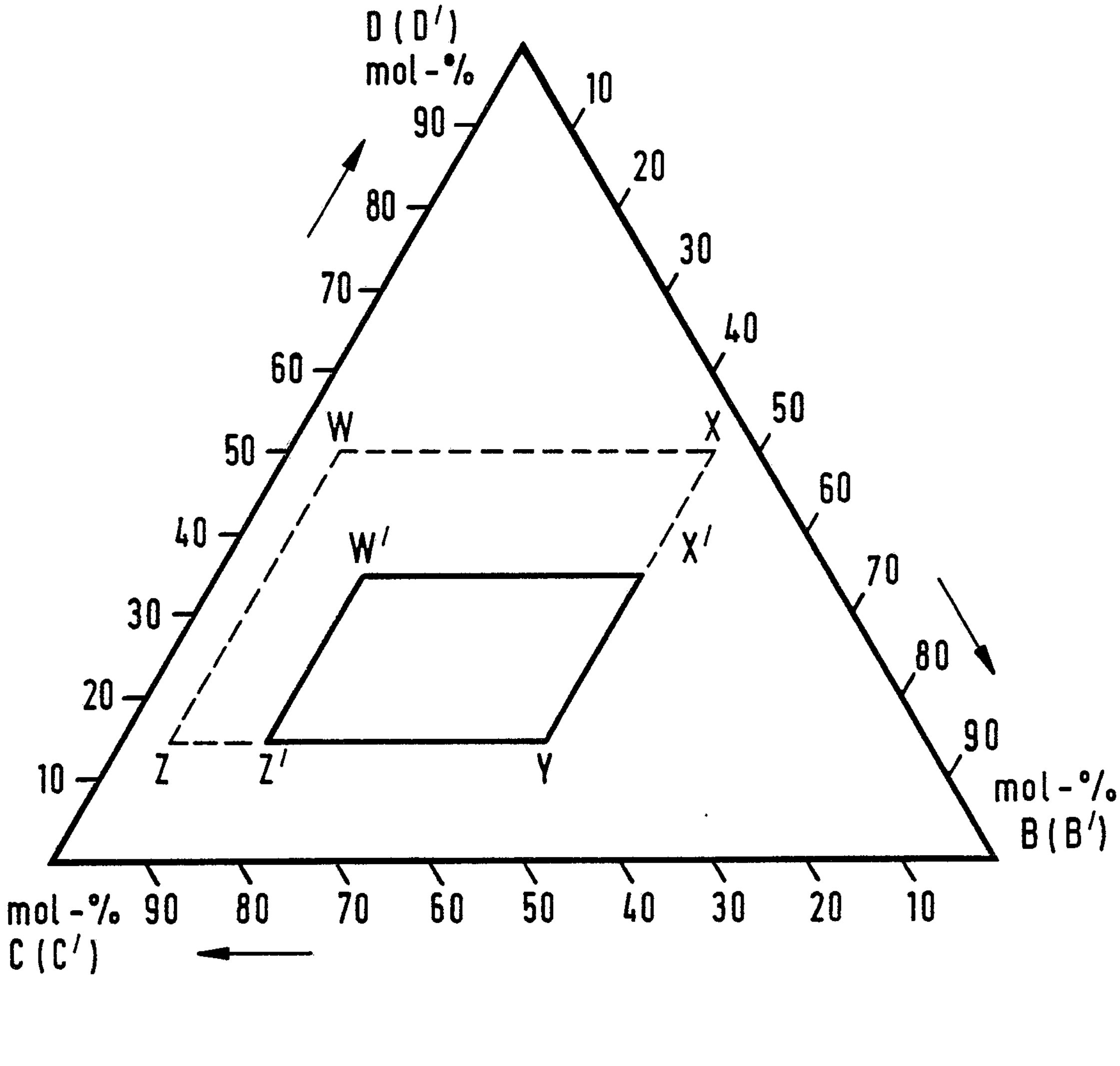
D (D')
mol-%
90
80
70
60
50
40
30
20
10
10
20
30
40
50
60
70
80
90
mol-%
B (B')
mol-%
C (C')
W
X
W'
X'
Z
Z'
Y

Fig. 3